# EUROPEAN PATENT APPLICATION

(11) **EP 4 692 805 A1**
(43) Date of publication of application: **11.02.2026**
(21) Application number: 25189809.4
(22) Date of filing: 16.07.2025
(51) Int. Cl.: G01N 35/00, G01N 35/04

(54) **PIPELINE SYSTEM AND METHOD FOR CONTROLLING SAMPLE OUTPUT**

(30) Priority: 09.08.2024 CN 202411099701
(71) Applicant: Shenzhen New Industries Biomedical Engineering Co., Ltd., Shenzhen, Guangdong 518122 (CN)
(72) Inventor: WU, Jinhong, Shenzhen (CN); CHEN, Shujuan, Shenzhen (CN); TANG, Junhui, Shenzhen (CN); YANG, Zhixiong, Shenzhen (CN); XIAO, Liyang, Shenzhen (CN); LI, Jinqi, Shenzhen (CN); PAN, Li, Shenzhen (CN); LUO, Chutuo, Shenzhen (CN)
(74) Representative: Office Freylinger

(57) **Abstract**

Embodiments of the disclosure relates to a pipeline system and a method for controlling sample output. The pipeline system includes: one or more analysis modules, configured to test samples; at least two sample output modules, where each sample output module includes a mechanical arm; a track, configured to connect the sample output modules to the analysis modules; and a control device , configured to plan a plurality of sample output paths for the sample to be output, wherein the plurality of sample output paths indicate a plurality of performable sample output modules, and determine a target sample output module from the plurality of performable sample output modules according to a preset sample output ratio and an experimental state of the at least two sample output modules and the plurality of sample output paths, and control the track to schedule the sample to be output to the target sample output module.

## Description

### Technical Field

The disclosure relates to the technical field of medical laboratory testing, in particular to a pipeline system and a method for controlling sample output.

### Background

In the field of medical laboratory testing, a pipeline, an efficient and automatic testing system, implements an automatic test process by connecting the sample pre-processing, analysis and tests, and post-processing in series through an automatic apparatus and a control system. Hence, its application greatly improves the test efficiency.

The sample output indicates that a tested sample or error sample is output, through a track, from the pipeline to a sample output module for being stored or processed subsequently. With an increase in demand for tests, some large-sized pipelines will be equipped with numerous sample output modules. In a scenario where numerous sample output modules are configured, how to guarantee the sample output efficiency and the sample output success rate by selecting a particular control strategy is a pressing problem.

### Summary

In view of that, in order to solve the technical problem, it is necessary to provide a pipeline system and a method for controlling sample output that can improve sample output efficiency and a sample output success rate.

In a first aspect, embodiments of the disclosure provide a pipeline system. The pipeline system includes:
one or more analysis modules, configured to test samples;
at least two sample output modules, where each sample output module includes a mechanical arm, and the mechanical arm is configured to output a sample to be output;
a track, configured to connect the sample output modules to the analysis modules; and
a control device, configured to plan a plurality of sample output paths for the sample to be output, where the plurality of sample output paths indicate a plurality of performable sample output modules, and determine a target sample output module from the plurality of performable sample output modules according to a preset sample output ratio and an experimental state of the at least two sample output modules and the plurality of sample output paths, and control the track to schedule the sample to be output to the target sample output module.

In some embodiments, the control device is configured to determine scheduling order of the sample to be output among the plurality of performable sample output modules according to the preset sample output ratio and the experimental state of the at least two sample output modules and the plurality of sample output paths, and the target sample output module is the first of the performable sample output modules determined according to the scheduling order.

In some embodiments, the control device is configured to control the track to schedule the sample to be output to a connection port between the track and the target sample output module after determining the target sample output module, and control, in a case that the experimental state and a load of the target sample output module meet a first requirement, track scheduling to cause the sample to be output to enter, through the connection port, the target sample output module.

In some embodiments, the first requirement is as follows: the experimental state of the target sample output module is in an experiment, and the load of the target sample output module is less than a threshold.

In some embodiments, the control device is further configured to determine, in a case that the experimental state and the load of the target sample output module do not meet the first requirement, that a next performable sample output module is the target sample output module according to the scheduling order, and control the track scheduling to convey the sample to be output to a connection port between the track and an updated target sample output module.

In some embodiments, each sample output module includes a sample storage device, and the plurality of sample output paths further indicate storable places of the sample storage devices of the performable sample output modules; and
the control device is further configured to determine, in a case that the experimental state of the target sample output module and a state of the sample storage device meet a second requirement, a target place from the storable places according to the state of the sample storage device after the sample to be output is scheduled to the target sample output module, and control the mechanical arm to store the sample to be output to the target place of the target sample output module.

In some embodiments, each of the sample storage devices accommodates a plurality of sample carriers, the sample carrier includes a plurality of placement places for loading sample tubes, and the storable place corresponds to the sample storage device, the sample carrier and the placement place; and
the state of the sample storage device includes an occupation state of the sample storage device, a placement state of the sample carrier in the sample storage device, and a remainder state of the placement place of the sample carrier.

In some embodiments, the second requirement is as follows: the occupation state of the sample storage device is an unoccupied state, the sample carrier is placed in the sample storage device that is in the unoccupied state, the sample carrier has a remaining placement place, and the experimental state of the target sample output module is in an experiment.

In some embodiments, the control device is configured to determine that the sample storage device being in the unoccupied state and holding the sample carrier having the remaining placement place is a target sample storage device, determine that the sample carrier having a minimum number of remaining placement places in the target sample storage device is the target sample carrier, and determine the target place from the remaining placement places of the target sample carrier.

In some embodiments, the control device is further configured to determine, in a case that the target sample carrier has a plurality of remaining placement places, that the first remaining placement place in preset holding order is the target place according to the preset holding order.

In a second aspect, embodiments of the disclosure further provide a method for controlling sample output. The method for controlling sample output is applied to the pipeline system, and the pipeline system includes:
one or more analysis modules , configured to test samples;
at least two sample output modules, where each sample output module includes a mechanical arm, and the mechanical arm is configured to output a sample to be output; and
a track, configured to connect the sample output modules to the analysis modules; where
the method includes:
   planning a plurality of sample output paths for the sample to be output, where the plurality of sample output paths indicate a plurality of performable sample output modules;
   determining a target sample output module from the plurality of performable sample output modules according to a preset sample output ratio and an experimental state of the at least two sample output modules and the plurality of sample output paths; and
   controlling the track to schedule the sample to be output to the target sample output module.

According to the pipeline system and the method for controlling sample output, in a case that the pipeline system is configured with the plurality of sample output modules, while the scheduling is implemented based on the planned sample output path, the preset sample output ratio is also considered, such that dynamic allocation can be implemented according to the sample output ratio set by a user, and flexible sample output is implemented. In addition, a real-time experimental state of the sample output module is considered, such that the sample to be output is prevented from being scheduled to the sample output module that is not in an experiment, and the sample output success rate and the sample output efficiency are improved accordingly.

### Brief Description of the Drawings

Fig. 1 is a schematic structural diagram of a pipeline system according to some embodiments;
Fig. 2 is a schematic flowchart of a method for controlling sample output according to some embodiments; and
Fig. 3 is an internal structural diagram of a computer device according to some embodiments.

### Detailed Description of the Embodiments

In order to make objectives, technical solutions, and advantages of embodiments of the disclosure clearer, embodiments of the disclosure will be further described below in detail with reference to accompanying drawings and examples. It should be understood that particular examples described herein are merely intended to explain embodiments of the disclosure rather than limit embodiments of the disclosure.

In the field of medical laboratory testing, a pre-processing module, a sample analyzer, and a post-processing module may be connected through a track according to demand, and then functions of data integration, process control, automatic operations, data analysis, etc. may be implemented through a control device, such that a biological sample can be more efficiently processed and analyzed automatically. The pre-processing module may include a sample feeding module, a centrifugation module, an uncovering module, etc. for implementing functions of sample feeding, centrifugation, uncovering, etc. respectively. According to examination demand, the sample analyzer may be equipped with a biochemical analyzer, an immune analyzer, etc. for implementing analysis functions of different detection items for the sample. The post-processing module may include a film sealing module, a sample output module, etc. for implementing functions of film sealing, sample output, etc.

Some large-scale pipelines are equipped with two or more sample output modules used for storing the samples output from the pipeline. With an increase in a number of sample output modules, how to improve sample output efficiency is a pressing problem.

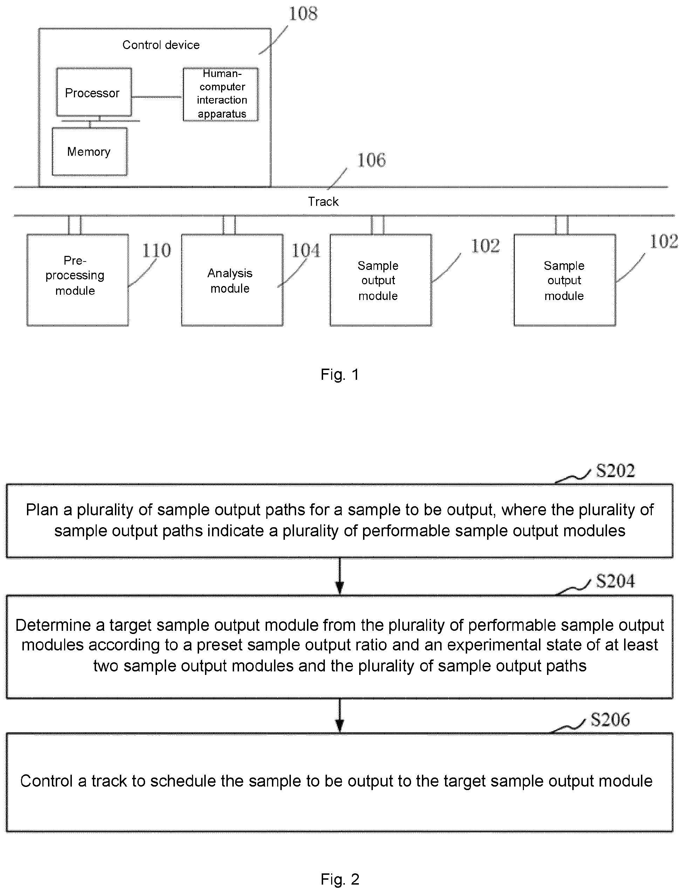

To solve this problem, as shown in Fig. 1, embodiments of the disclosure provides a pipeline system. The pipeline system includes at least two sample output modules 102, one or more analysis modules 104, a track 106, and a control device 108.

The analysis module 104 is configured to test the sample. Each sample output module 102 includes a mechanical arm, and the mechanical arm is configured to output a sample to be output. The track 106 is configured to connect the sample output modules 102 to the analysis modules 104, and the control device 108 is configured to plann a plurality of sample output paths for the sample to be output. The plurality of sample output paths indicate a plurality of performable sample output modules, and the control device determines a target sample output module from the plurality of performable sample output modules according to a preset sample output ratio and an experimental state of the at least two sample output modules and the plurality of sample output paths, and controls the track to schedule the sample to be output to the target sample output module.

It can be understood that in some embodiments, the pipeline system may further include a pre-processing module 110 configured to implement pre-processing such as sample feeding, centrifugation and uncovering on the sample.

In some embodiments, a sample output function and a sample feeding function are integrated in a sample feeding and output module. In some embodiments, the pipeline system includes at least two sample feeding and output modules, one or more analysis modules, a track and a control device.

The pipeline system uses the pre-processing module to pre-process the sample. After the pre-processing is completed, the sample is conveyed to the analysis module 104, and the analysis module 104 tests the sample. For the sample to be output that is tested and other samples to be output on the pipeline, the control device 108 plans the plurality of sample output paths, and the plurality of the sample output paths indicate the plurality of performable sample output modules.

The sample output path is used for indicating a conveying node during the sample output. The sample output module usually includes a plurality of sample storage devices, each of the sample storage devices accommodates a plurality of sample carriers, and the sample carrier includes a plurality of placement places for loading sample tubes. Correspondingly, the sample output path may include a sample output module identifier, a sample storage device identifier, and a sample carrier identifier that are used for indicating which sample output module the sample to be output may be conveyed to, which sample storage device of the sample output module the sample to be output may be conveyed to, and which sample carrier of the sample storage device the sample to be output may be conveyed to respectively.

In some embodiments, the sample storage device of the sample output module may be a drawer, and one sample output module may include a plurality of drawers. The sample carrier in each drawer is a sample box, and the sample box has a plurality of sample tube placement place. Correspondingly, the sample output path may include a sample output module identifier, a drawer identifier, and a sample box identifier that are used for indicating which sample output module the sample to be output may be conveyed to, which drawer of the sample output module the sample to be output may be conveyed to, and which sample box of the drawer the sample to be output may be conveyed to respectively.

The control device plans the plurality of sample output paths for the sample to be output, and the sample output modules included in the plurality of sample output paths are the performable sample output modules. That is, the performable sample output modules are the sample output modules that are indicated by the sample output paths and may be used for outputting the sample. The control device plans the plurality of sample output paths for the sample to be output according to a preset path planning strategy.

In some embodiments, in response to a sample meeting a sample output condition, it is determined that the sample is the sample to be output, and the sample output path is triggered to be planned for the sample to be output. For example, in response to the sample being tested, it is determined that the sample is the sample to be output, and the sample output path is planned for the sample to be output. For example, in response to an error sample being obtained on the track, it is determined that the sample is the sample to be output, and the sample output path is planned for the sample to be output.

In some embodiments, the path planning strategy should consider the experimental state of the sample output module. In some embodiments, the control device plans the plurality of sample output paths for the sample to be output according to the experimental state of the sample output module. For example, the pipeline system includes three sample output modules. When planning the sample output path for the sample to be output, the control device determines that two sample output modules whose experimental states are in an experiment in the three sample output modules are the performable sample output modules, and then plans the sample output paths involving the two performable sample output modules for the sample to be output.

In some embodiments, the path planning strategy may consider matching of sample information and designated sample storage information of the sample output module. In some embodiments, a user may preset the sample storage information of each sample output module. For example, an emergency sample is designated as being stored in the sample output module 1, and an ordinary sample is designated as being stored in the sample output module 2. For example, a sample of a test item A is designated as being stored in the sample output module 1 and the sample output module 3, and a sample of a test item B is designated as being stored in the sample output module 2. When planning the path for the sample to be output, the control device determines the sample information of the sample to be output, and determines the planned path of the sample to be output according to the sample module whose designated sample storage information matches the sample information from all the sample modules. For example, if the sample to be output is the item of the test item A, the performable sample output modules of the sample include the sample output module 1 and the sample output module 3.

In some embodiments, the path planning strategy may also consider the experimental state of the sample output module and a matching degree between a sample type and a designated sample storage type of the sample output module, that is, a combination of the two methods. In some embodiments, the control device may first filter out candidate sample output modules that are not in an experiment according to the experimental state of the sample output module, and then plan the plurality of sample output paths from the candidate sample output modules according to the matching between the sample information and the designated sample storage information of the sample output module, so as to obtain the performable sample output module.

In a case where a plurality of sample output modules are configured on the pipeline system, a laboratory may set the sample output ratio according to demand. The sample output ratio is used for determining a sample output amount of the sample output module. Generally speaking, in a case of the plurality of sample output modules, the sample output ratio may be set in a balanced way. For example, in a case where there are three sample output modules, the sample output ratio may be set as 1:1:1. The samples to be output on the pipeline are scheduled in a balanced way to the sample output modules according to the sample output ratio, such that the sample output amounts of the sample output modules are balanced.

Furthermore, the pipeline system also allows the laboratory to flexibly set the sample output ratio according to demand. For example, In a case where there are many tests of a particular type in the laboratory, two sample output modules may be arranged specifically to receive output samples of this type of test, and the sample output ratio may be set as 1:2:2. In this way, according to the sample output ratio, most of the samples of this test item are conveyed to a second sample output module and a third sample output module.

In some embodiments, the control device determines a target sample output module from the plurality of performable sample output modules according to a preset sample output ratio and a real-time experimental state of the sample output module and the plurality of sample output paths, and controls the track to schedule the sample to be output to the target sample output module.

In some embodiments, in a case that the pipeline system is configured with the plurality of sample output modules, while the scheduling is implemented based on the planned sample output path, the preset sample output ratio is also considered, such that dynamic allocation can be implemented according to the sample output ratio set by a user, and flexible sample output is implemented. In addition, the real-time experimental state of the sample output module is considered, such that the sample to be output is prevented from being scheduled to the sample output module that is not in an experiment, and a sample output success rate and the sample output efficiency are improved accordingly.

In some embodiments, the control device integrates functions such as pipeline control, track scheduling and sample output module control. In some embodiments, a plurality of controllers may be configured to implement the control functions respectively. For example, a pipeline controller may be arranged to plan the plurality of sample output paths for each sample to be output. A track controller may be arranged and used for determining the target sample output module from the plurality of performable sample output modules according to the preset sample output ratio and the experimental state of the at least two sample output modules and the plurality of sample output paths, and controlling the track to schedule the sample to be output to the target sample output module. A sample output controller may be arranged and used for outputting the sample to be output in the sample output module. In this way, after the pipeline controller plans the plurality of sample output paths, if the pipeline system is subjected to manual interference or the experimental state of the analysis module changes, the track controller and the sample output controller may change the sample output paths in time according to information obtained in real time, thus improving the sample output efficiency.

In some embodiments, the control device is configured to determine scheduling order of the sample to be output among the plurality of performable sample output modules according to the preset sample output ratio and the experimental state of the at least two sample output modules and the plurality of sample output paths, and the target sample output module is the first of the performable sample output modules determined according to the scheduling order. The target sample output module is a sample output module used for outputting the sample to be output. In some embodiments, the performable sample output modules are ranked, and the scheduling order is determined. The scheduling order indicates priority, and the sample output module is ranked first in the scheduling order, which indicates that the sample output module has high priority as the target sample output module. In this way, according to the scheduling order, it is determined that the first sample output module ranked first is the target sample output module. This method for determining the target sample output module has the advantage that when the target sample output module does not meet the sample output condition, it can be determined quickly that a next ranked sample output module is the target sample output module according to the scheduling order, thus improving the sample output success rate. For example, a case that does not meet the sample output condition may be as follows: the experimental state of the target sample output module is intra-shutdown or intra-pause, or a load of the target sample output module is greater than a threshold.

The performable sample output modules are determined according to the plurality of sample output paths, and then the performable sample output modules are ranked. The scheduling order of the performable sample output modules is affected by factors including the preset sample output ratio and the experimental state.

It can be understood that the state of the sample output module changes dynamically during actual running of the pipeline system. For the plurality of planned sample output paths, the control device also determines the target sample output module according to the real-time experimental state of the sample output module.

In some embodiments, in a case where the experimental state of one or more performable sample output modules is not in an experiment, it is determined that the one or more performable sample output modules are the performable sample output modules ranked last.

In some embodiments, a first ranked performable sample output module is determined according to the preset sample output ratio. For example, in a case that the ratio of the performable sample output modules is 1:1:1, the three performable sample output modules may be ranked first in three consecutive times of scheduling respectively, to serve as the performable sample output modules that preferentially implement the sample output.

For example, there are two performable sample output modules A and B, and the ratio of the performable sample output module is 1:1. In a case where the scheduling order determined last time is A and B, and the last sample to be output is output by the sample output module A, scheduling order may be determined as B and A according to the preset sample output ratio this time. It may be determined that the performable sample output module B is the target sample output module of this sample to be output according to the scheduling order.

In some embodiments, the priority of the performable sample output modules is determined according to the preset sample output ratio, the experimental state and the plurality of sample output paths to form the scheduling order, and the target sample output module is determined according to the scheduling order. In this way, various factors may be comprehensively considered to determine that the performable sample output module with the highest priority is the target sample output module. According to this method, the load of the sample output module and the experimental state of the performable sample output modules are considered, thereby improving the sample output efficiency and the sample output success rate.

In some embodiments, the track is controlled to schedule the sample to be output to a connection port between the track and the target sample output module after the target sample output module is determined, and in a case that the experimental state and a load of the target sample output module meet a first requirement, track scheduling is controlled to cause the sample to be output to enter, through the connection port, the target sample output module.

In some embodiments, the connection port between the track and the target sample output module refers to a junction between the target sample output module and the pipeline track. After determining the target sample output module, the control device controls the track to schedule the sample to be output to the connection port between the track and the target sample output module. At this connection port, the control device obtains the experimental state and the load of the target sample output module in real time. In response to the experimental state and the load of the target sample output module meeting the first requirement, the control device controls the track scheduling to cause the sample to be output to enter, through the connection port, the target sample output module. In this way, the condition that the sample to be output may not be processed in time since the experimental state and the load of the target sample output module do not meet the requirement after the sample to be output is scheduled into the target sample output module can be avoided.

The first requirement may include as follows: the experimental state of the target sample output module is in an experiment, and the load of the target sample output module is less than a threshold.

In some embodiments, the load of the target sample output module may be characterized by a number of samples to be output that are temporarily stored in an inner track of the target sample output module or by a number of samples to be output that are temporarily stored on a sample temporary storage device of the target sample output module. The sample temporary storage device may be a section on the pipeline track or may be a device for temporarily storing the sample to be output that is built in the target sample output module. In some embodiments, In a case where the track schedules the sample to be output to the connection port between the target sample output module and the track, before the sample to be output is scheduled to the inner track or the sample temporary storage device of the target sample output module, whether the experimental state and the load of the target sample output module meet the first requirement are further determined. In a case where the experimental state and the load of the target sample output module meet the first requirement, the track scheduling is controlled to cause the sample to be output to enter, through the connection port, the target sample output module. In this way, a processing capacity of the target sample output module can be predicted in advance according to the experimental state and the load of the target sample output module, and the sample output success rate can be improved.

In some embodiments, the control device is further configured to determine, in a case that the experimental state and the load of the target sample output module do not meet the first requirement, that a next performable sample output module is the target sample output module according to the scheduling order, and control the track scheduling to convey, through the connection port, the sample to be output to a connection port between the track and an updated target sample output module.

For example, the scheduling order of the performable sample output modules A and B for the sample to be output is A and B, and it is determined that the performable sample output module A is the target sample output module. In a case where the sample to be output is scheduled to the connection port between the track and the sample output performable module A, if the experimental state and the load of performable sample output module A do not meet the first requirement, it is determined that the performable sample output module B is the target sample output module according to the scheduling order, and the track scheduling is controlled to convey the sample to the connection port between the track and the performable sample output module B.

It can be understood that after the sample to be output is scheduled to the connection port between the updated target sample output module and the track, it is still necessary to determine that the experimental state and the load of the updated target sample output module meet the first requirement and then the track scheduling is controlled to cause the sample to be output to enter, through the connection port, the updated target sample output module.

In a case where the sample to be output cannot enter, according to the scheduling order, any sample output module to be output, a sample output path may be re-allocated for the sample to be output, to re-control output of the sample.

In some embodiments, the track schedules the sample to be output to the connection port between the target sample output module and the track. In a case where the target sample output module does not meet the sample output condition, it can be determined quickly that a next ranked sample output module is the target sample output module according to the scheduling order, thus improving the sample output success rate.

In some embodiments, each sample output module includes a sample storage device. The plurality of sample output paths further indicate storable places of the sample storage devices of the performable sample output modules.

The control device is further configured to determine, in a case that the experimental state of the target sample output module and a state of the sample storage device meet a second requirement, a target place from the storable places according to the state of the sample storage device after the sample to be output is scheduled to the target sample output module, and control the mechanical arm to store the sample to be output to the target place of the target sample output module.

That is, after the sample to be output is scheduled to the target sample output module, the experimental state of the target sample output module and the state of the sample storage device are further tested. In a case where the experimental state of the target sample output module and the state of the sample storage device meet the second requirement, the target place is determined from the storable places according to the state of the sample storage device. After the target place is determined, the mechanical arm is controlled to store the sample to be output to the target place of the target sample output module.

In some embodiments, when the target storage location of the sample in the sample storage device is determined, the state of the sample storage device and the experimental state of the target sample output module are considered. In a case where the state of the sample storage device and the experimental state of the target sample output module meet the second requirement, the storage location is allocated to the sample according to the state of the sample storage device. In this way, the placement place that can load the sample to be output can be determined from the plurality of sample storage devices of the target sample output module, thus improving the sample output success rate.

In some embodiments, each of the sample storage device accommodates a plurality of sample carriers, the sample carrier includes a plurality of placement places for loading sample tubes, and the storable place corresponds to the sample storage device, the sample carrier and the placement place.

Correspondingly, the state of the sample storage device includes an occupation state of the sample storage device, a placement state of the sample carrier in the sample storage device, and a remainder state of the placement place of the sample carrier.

The occupation state of the sample storage device includes an occupied state and an unoccupied state. In a case where the sample storage device is in the occupied state, samples cannot be loaded into the sample storage device. In some embodiments, the sample storage device is a drawer, and the drawer has two states of a pulling-out state and a closed state. In a case where the drawer is in the pulling-out state, the sample cannot be loaded into the drawer. In a case where the drawer is in the closed state, the drawer is locked, and the sample may be loaded into the drawer if the drawer has the storable device. The pulling-out state corresponds to the occupied state, and the closed state corresponds to the unoccupied state.

The placement state of the sample carrier in the sample storage device is used for indicating whether the sample carrier is placed in the sample storage device. The placement state of the sample carrier in the sample storage device includes two states as follows: the sample carrier is placed in the sample storage device, and the sample carrier is not placed in the sample storage device. In a case where the sample carrier is placed in the sample storage device, the sample storage device has the placement place.

In a case where the sample carrier is placed in the sample storage device, the remainder state of the placement place of the sample carrier is further tested. The remainder state of the placement place of the sample carrier includes a state having a remaining placement place and a state not having the remaining placement place. In a case where the placement place of the sample carrier has the remaining placement place, it indicates that the sample carrier may load the sample to be output.

On such a basis, the second requirement is as follows: the occupation state of the sample storage device is an unoccupied state, the sample carrier is placed in the sample storage device that is in the unoccupied state, the sample carrier has the remaining placement place, and the experimental state of the target sample output module is in an experiment.

After the sample to be output is scheduled to the target sample output module, in a case where the occupation state of the sample storage device is the unoccupied state, the sample carrier is placed in the sample storage device in the unoccupied state, the sample carrier has the remaining placement place, and the experimental state of the target sample output module is in an experiment, the target place is determined from the storable places according to the state of the sample storage device, and the mechanical arm is controlled to store the sample to be output to the target place of the target sample output module.

That is, when the target storage place of the sample to be output in the sample storage device is determined, it is necessary to consider an experimental state requirement of the sample output module and a state requirement of the sample storage device.

In some embodiments, the experimental state requirement of the target sample output module is as follows: the experimental state of the target sample output module needs to be in an experiment. The experimental state requirement of the target sample output module is used for determining whether the target sample output module may perform the sample output.

A requirement for the sample storage device is as follows: the target sample output module has the sample storage device in the unoccupied state, the sample carrier is placed in the sample storage device in the unoccupied state, and the sample carrier has the remaining placement place. The requirement for the sample storage device is used for determining whether the target sample output module has a place where the sample to be output may be loaded.

For example, the target sample output module includes three drawers, each drawer may accommodate six sample carriers, and each sample carrier is provided with a placement place for loading the sample tube of the sample to be output.

When the target storage place is determined, the experimental state of the target sample output module is required to be in an experiment with consideration of the experimental state requirement of the target sample output module. With consideration of the requirement for the sample storage device, if one of the three drawers of the target sample output module is in the occupied state in a case where the target sample output module is in an experiment, whether the sample carriers are placed in the two drawers in the unoccupied state is determined. In a case where the sample carriers are placed in the two drawers, whether the sample carriers of the two drawers have the remaining placement place is determined. If so, the target sample output module has the placement place for loading the sample to be output. In this case, the target place may be determined, according to the state of the sample storage device, from the storable places indicated by the sample output paths.

In some embodiments, the control device is configured to determine that the sample storage device being in the unoccupied state and holding the sample carrier having the remaining placement place is a target sample storage device, determine that the sample carrier having a minimum number of remaining placement places in the target sample storage device is the target sample carrier, and determine the target place from the remaining placement places of the target sample carrier.

In some embodiments, the target sample storage device is determined first. In some embodiments, the sample storage device is the drawer in the target sample output module, and thus, a target drawer in the target sample output module needs to be determined first correspondingly.

The target sample storage device is the sample storage device being in the unoccupied state and holding the sample carrier having the remaining placement place. For example, the target sample storage device is the drawer being in the closed state and holding the sample box having the remaining placement place in the sample output module.

In some embodiments, there may be a plurality of target sample storage devices that meet the requirement. For example, two drawers of the three drawers in the target sample output module are in the closed state, sample boxes are placed in the two drawers, and the sample boxes have the remaining placement places. Further, it may be determined that a first ranked sample storage device is a final target sample storage device according to preset order of the target sample storage devices that meet the requirement. The preset order may be order of drawer identifiers or the order of distances between the sample storage device and the mechanical arm.

For example, it may be determined that the drawer corresponding a first ranked drawer identifier is the target sample storage device according to the order of the drawer identifiers. For example, a drawer 2 and a drawer 3 in the target sample output module are both in the closed state, the sample boxes are placed in the drawers, and the sample box has the remaining placement place. Based on this, it may be determined that the drawer 2 is the target sample storage device.

After the target sample storage device is determined, for the sample carriers in the target sample storage device, it is determined from the sample carriers that the sample carrier with a minimum number of remaining placement places is the target sample carrier. Thus, the samples to be output can be collected to the target sample carrier as soon as possible, and the target sample carrier can be filled as soon as possible. Due to an operation habit of the laboratory, the filled sample carrier is usually transferred to other places (such as an offline refrigerator or other pipeline systems).

For example, if one of the three drawers of the target sample output module is in the occupied state and the two drawers in the unoccupied state are the drawer 1 and the drawer 3 respectively, whether the sample carriers are placed in the drawer 1 and the drawer 3 is determined. in a case where the sample carriers are placed in such two drawers and have the remaining placement places, it is determined that the drawer 1 is the target sample storage device according to the preset order.

If one of the three drawers of the target sample output module is in the occupied state, the two drawers in the unoccupied state are the drawer 1 and the drawer 3 respectively, the drawer 3 has no remaining placement places and the drawer 1 has the remaining placement place, the drawer 1 is taken as the target sample storage device.

After it is determined that the drawer 1 is the target sample storage device, six sample boxes are detected in the drawer 1, a number of remaining placement places of a fifth sample box in the six sample boxes is minimum, and it is determined that the fifth sample box in the drawer 1 is the target sample carrier.

In some embodiments, the control device is further configured to determinie, in a case that the target sample carrier has a plurality of remaining placement places, that the first remaining placement place in preset holding order is the target place according to the preset holding order.

The preset holding order is the order in which the mechanical arm puts the sample tubes of the samples to be output at the placement places of the sample carrier. The holding order is preset generally according to a shape of the sample carrier and a distribution of the placement places. With a square sample carrier including N rows and M columns of placement places as an example, the mechanical arm generally puts the samples in sequence in a first row per column and then in a second row per column after the first row is full, and puts the samples in the placement places in full according to the same steps.

For example, it is determined that the fifth sample box in the drawer 1 is the target sample carrier. In a case where the target sample carrier has the plurality of remaining placement places, and the sample tube of the sample to be output was placed at the placement place in the second row and third column last time according to the holding order, a placement place in the second row and fourth column is the target place for this time according to the holding order.

In this way, the samples to be output can be placed in sequence at the placement places of the target carrier during the sample output, such that the sample carrier can be effectively utilized and a utilization rate can be ensured.

According to the pipeline system of embodiments of the disclosure, in a case that the pipeline system is configured with the plurality of sample output modules, while the scheduling is implemented based on the planned sample output path, the preset sample output ratio is also considered, such that dynamic allocation can be implemented according to the sample output ratio set by a user, and flexible sample output is implemented. In addition, a real-time experimental state of the sample output module is considered, such that the sample to be output is prevented from being scheduled to the sample output module that is not in an experiment, and the sample output success rate and the sample output efficiency are improved accordingly.

Further, the track is controlled to schedule the sample to be output to the connection port between the track and the target sample output module after the target sample output module is determined, and in a case that the experimental state and the load of the target sample output module meet the first requirement, the track scheduling is controlled to cause the sample to be output to enter, through the connection port, the target sample output module.

In addition, in a case that the experimental state of the target sample output module and the state of the sample storage device meet the second requirement, the target place is determined from the storable places according to the state of the sample storage device after the sample to be output is scheduled to the target sample output module, and the mechanical arm is controlled to store the sample to be output to the target place of the target sample output module.

In this way, each link in the scheduling process of the pipeline system can consider the real-time experimental state of the target sample output module and a corresponding influencing factor in a next operation link. Thus, influence of the real-time experimental state and influencing factors on the current sample output can be predicted in advance, the sample output path can be adjusted immediately when the current sample output is affected, and the sample output success rate and the sample output efficiency are improved.

In some embodiments, a method for controlling sample output is provided and is applied to the pipeline system as shown in Fig. 1. As shown in Fig. 2, the method for controlling sample output includes:
Step 202, a plurality of sample output paths are planned for the sample to be output, where the plurality of sample output paths indicate a plurality of performable sample output modules.
Step 204, a target sample output module is determined from the plurality of performable sample output modules according to a preset sample output ratio and an experimental state of the at least two sample output modules and the plurality of sample output paths.
Step 206, the track is controlled to schedule the sample to be output to the target sample output module.

According to the method for controlling sample output, in a case that the pipeline system is configured with the plurality of sample output modules, while the scheduling is implemented based on the planned sample output path, the preset sample output ratio is also considered, such that dynamic allocation can be implemented according to the sample output ratio set by a user, and flexible sample output is implemented. In addition, a real-time experimental state of the sample output module is considered, such that the sample to be output is prevented from being scheduled to the sample output module that is not in an experiment, and the sample output success rate and the sample output efficiency are improved accordingly.

In some embodiments, the step that a target sample output module is determined from the plurality of sample output performable modules according to a preset sample output ratio and an experimental state of the at least two sample output modules and the plurality of sample output paths includes: scheduling order of the sample to be output among the plurality of sample output modules is determined according to the preset sample output ratio and the experimental state of the at least two sample output modules and the plurality of sample output paths, and the target sample output module is the first of the performable sample output modules determined according to the scheduling order.

In some embodiments, the method for controlling sample output further includes: the track is controlled to schedule the sample to be output to a connection port between the track and the target sample output module after the target sample output module is determined, and in a case that the experimental state and a load of the target sample output module meet a first requirement, track scheduling is controlled to cause the sample to be output to enter, through the connection port, the target sample output module.

The first requirement is as follows: the experimental state of the target sample output module is in an experiment, and the load of the target sample output module is less than a threshold.

In some embodiments, the method for controlling sample output further includes: in a case that the experimental state and the load of the target sample output module do not meet the first requirement, it is determined that a next performable sample output module is the target sample output module according to the scheduling order, and the track scheduling is controlled to convey the sample to be output to a connection port between the track and an updated target sample output module.

In some embodiments, each sample output module includes a sample storage device, and the plurality of sample output paths further indicate storable places of the sample storage devices of the performable sample output modules.

The method for controlling sample output further includes: in a case that the experimental state of the target sample output module and a state of the sample storage device meet a second requirement, a target place is determined from the storable places according to the state of the sample storage device after the sample to be output is scheduled to the target sample output module, and the mechanical arm is controlled to store the sample to be output to the target place of the target sample output module.

In some embodiments, each of the sample storage device accommodates a plurality of sample carriers, the sample carrier includes a plurality of placement places for loading sample tubes, and the storable place corresponds to the sample storage device, the sample carrier and the placement place; and

the state of the sample storage device includes an occupation state of the sample storage device, a placement state of the sample carrier in the sample storage device, and the remainder state of the placement place of the sample carrier.

In some embodiments, the second requirement is as follows: the occupation state of the sample storage device is an unoccupied state, the sample carrier is placed in the sample storage device that is in the unoccupied state, the sample carrier has the remaining placement place, and the experimental state of the target sample output module is in an experiment.

In some embodiments, the step that a target place is determined from the storable places according to the state of the sample storage device includes: it is determined that the sample storage device being in the unoccupied state and holding the sample carrier having the remaining placement place is a target sample storage device, it is determined that the sample carrier having a minimum number of remaining placement places in the target sample storage device is the target sample carrier, and the target place is determined from the remaining placement places of the target sample carrier.

In some embodiments, the method for controlling sample output further includes: in a case that the target sample carrier has a plurality of remaining placement places, it is determined that the first remaining placement place in preset holding order is the target place according to the preset holding order.

It can be understood that the method for controlling sample output is implemented by the control device in Fig. 1, and the solution to the problem provided by the method for controlling sample output is similar to an implementation solution described in the pipeline system. Thus, reference can be made to the limitation to the pipeline system in the text described above for specific limitation to the embodiments of the method for controlling sample output, which will not be repeated herein.

It should be understood that although steps in the flowchart involved in the embodiments described above are shown sequentially as indicated by arrows, these steps are not necessarily performed in order indicated by the arrows. Unless explicitly stated in this text, performance of these steps is not strictly limited in order, and these steps can be performed in another order. In addition, at least some steps in the flowchart involved in the embodiments described above may include a plurality of steps or a plurality of stages. These steps or stages are not necessarily performed at the same moment, and may alternatively be performed at different moments. Performance order of these steps or stages is not necessarily sequential, and these steps or stages may be performed by turns or alternately with other steps or at least some steps or stages of the other steps.

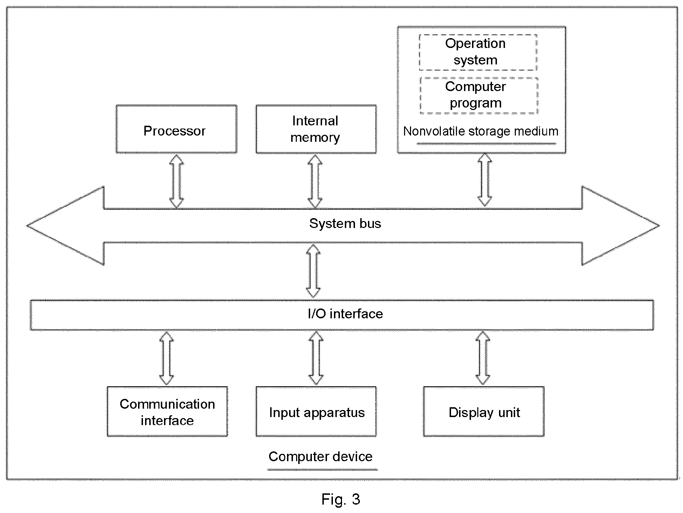

In some embodiments, a computer device is provided. The computer device may be the control device in Fig. 1, and its internal structure diagram may be shown in Fig. 3. The computer device includes a processor, a memory, a communication interface, a display screen and an input apparatus that are connected through a system bus. The processor of the computer device is configured to provide computing and control capabilities. The memory of the computer device includes a non-transitory storage medium and an internal memory. The non-transitory storage medium stores an operation system and a computer program. The internal memory provides an environment for running of the operation system and the computer program in the non-transitory storage medium. The communication interface of the computer device is configured for wired or wireless communication with the external terminal, and the wireless mode may be implemented through WIFI, the mobile cellular network, near field communication (NFC) or other technologies. The computer program implements the method for controlling sample output when executed by the processor. The display screen of the computer device may be a liquid crystal display screen or an electronic ink display screen. The input apparatus of the computer device may be a touch layer covering the display screen, or may be a button, a trackball or a touch pad arranged on a shell of the computer device, or may be an external keyboard, a touch pad or a mouse.

It can be understood by those skilled in the art that the structure shown in Fig. 3 is merely a block diagram of some structure related to the solution of embodiments of the disclosure, and does not constitute limitation to the computer device to which the solution of embodiments of the disclosure is applied. The specific computer device may include more or less components than those shown in the figure, or combine some components, or have different component arrangements.

Those skilled in the art can understand that all or some processes implementing the method in the embodiments described above can be implemented by related hardware under instructing by the computer program. The computer program may be stored in a non-transitory computer-readable storage medium, and the computer program may include the processes of the method embodiments described above when executed. Any reference to the memory, the database or other media used in the examples according to embodiments of the disclosure may include at least one of a non-transitory memory and a transitory memory. The non-transitory memory may include a read-only memory (ROM), a magnetic tape, a floppy disk, a flash memory, an optical memory, a high-density embedded non-transitory memory, a resistive random access memory (ReRAM), a magnetoresistive random access memory (MRAM), a ferroelectric random access memory (FRAM), a phase change memory (PCM), a graphene memory, etc. The transitory memory may include a random access memory (RAM), an external cache memory, etc. The RAM may be in various forms, such as a static random access memory (SRAM) or a dynamic random access memory (DRAM), which is illustrative and non-limitative. The databases involved in the examples according to embodiments of the disclosure may include at least one of a relational database and a non-relational database. The non-relational databases may include, but is not limited to, a distributed database based on a blockchain. The processor involved in the examples according to embodiments of the disclosure may include, but is not limited to, a general processor, a central processing unit, a graphics processing unit, a digital signal processor, a programmable logic device, a data processing logic device based on quantum computing, etc.

The technical features of the embodiments described above can be arbitrarily combined. To simplify description, not all possible combinations of the features of the embodiments described above are described. However, the combinations of these technical features should fall within the scope in the description in the case of no conflict.

The embodiments described above are merely several types of embodiments of the disclosure, and are specifically described in detail, but cannot be interpreted as limitation to the scope of the patent for embodiments of the disclosure as a result. It should be noted that several variations and improvements can also be made by those of ordinary skill in the art without departing from the concept of embodiments of the disclosure, and should fall within the protection scope of embodiments of the disclosure. Hence, the protection scope of embodiments of the disclosure should be subject to the appended claims.

## Claims

1. A pipeline system, comprising:
one or more analysis modules, configured to test samples;
at least two sample output modules, wherein each sample output module comprises a mechanical arm, and the mechanical arm is configured to output a sample to be output;
a track, configured to connect the sample output modules to the analysis modules; and
a control device, configured to plan a plurality of sample output paths for the sample to be output, wherein the plurality of sample output paths indicate a plurality of performable sample output modules, and determine a target sample output module from the plurality of performable sample output modules according to a preset sample output ratio and an experimental state of the at least two sample output modules and the plurality of sample output paths, and control the track to schedule the sample to be output to the target sample output module.

2. The pipeline system as claimed in claim 1, wherein the control device is configured to determine scheduling order of the sample to be output among the plurality of performable sample output modules according to the preset sample output ratio and the experimental state of the at least two sample output modules and the plurality of sample output paths, and the target sample output module is the first of the performable sample output modules determined according to the scheduling order.

3. The pipeline system as claimed in claim 2, wherein the control device is configured to control the track to schedule the sample to be output to a connection port between the track and the target sample output module after determining the target sample output module, and control, in a case that the experimental state and a load of the target sample output module meet a first requirement, track scheduling to cause the sample to be output to enter, through the connection port, the target sample output module.

4. The pipeline system as claimed in claim 3, wherein the first requirement comprises: the experimental state of the target sample output module is in an experiment, and the load of the target sample output module is less than a threshold.

5. The pipeline system as claimed in claim 3, wherein the control device is further configured to determine, in a case that the experimental state and the load of the target sample output module do not meet the first requirement, that a next performable sample output module is the target sample output module according to the scheduling order, and control the track scheduling to convey the sample to be output to a connection port between the track and an updated target sample output module.

6. The pipeline system as claimed in any one of claims 1 to 5, wherein each sample output module comprises a sample storage device, and the plurality of sample output paths further indicate storable places of the sample storage devices of the performable sample output modules; and
the control device is further configured to determine, in a case that the experimental state of the target sample output module and a state of the sample storage device meet a second requirement, a target place from the storable places according to the state of the sample storage device after the sample to be output is scheduled to the target sample output module, and control the mechanical arm to store the sample to be output to the target place of the target sample output module.

7. The pipeline system as claimed in claim 6, wherein each of the sample storage devices accommodates a plurality of sample carriers, the sample carrier comprises a plurality of placement places for loading sample tubes, and the storable place corresponds to the sample storage device, the sample carrier and the placement place; and
the state of the sample storage device comprises an occupation state of the sample storage device, a placement state of the sample carrier in the sample storage device, and a remainder state of the placement place of the sample carrier.

8. The pipeline system as claimed in claim 7, wherein the second requirement comprises: the occupation state of the sample storage device is an unoccupied state, the sample carrier is placed in the sample storage device that is in the unoccupied state, the sample carrier has a remaining placement place, and the experimental state of the target sample output module is in an experiment.

9. The pipeline system as claimed in claim 8, wherein the control device is configured to determine that the sample storage device being in the unoccupied state and holding the sample carrier having the remaining placement place is a target sample storage device, determine that the sample carrier having a minimum number of remaining placement places in the target sample storage device is the target sample carrier, and determine the target place from the remaining placement places of the target sample carrier.

10. The pipeline system as claimed in claim 9, wherein the control device is further configured to determine, in a case that the target sample carrier has a plurality of remaining placement places, that the first remaining placement place in preset holding order is the target place according to the preset holding order.

11. The pipeline system as claimed in claim 1, wherein the control device is further configured to:
plan the plurality of sample output paths for the sample to be output according to a preset path planning strategy, wherein the preset path planning strategy is used for planning the plurality of sample output paths for the sample to be output according to at least one of an experiment state of the sample output module and a matching condition between a sample information and a designated sample storage information of the sample output module.

12. The pipeline system as claimed in claim 1, wherein the control device comprises: a pipeline controller, a track controller, a sample output controller, wherein the pipeline controller is configured to plan the plurality of sample output paths for each sample to be output; **The** track controller is configured to determine the target sample output module from the plurality of performable sample output modules according to the preset sample output ratio and the experimental state of the at least two sample output modules and the plurality of sample output paths, and control the track to schedule the sample to be output to the target sample output module; The sample output controller is configured to output the sample to be output in the target sample output module.

13. The pipeline system as claimed in claim 3, wherein the load of the target sample output module is **characterized by** a number of samples to be output that are temporarily stored in an inner track of the target sample output module or by a number of samples to be output that are temporarily stored on a sample temporary storage device of the target sample output module. The sample temporary storage device comprises: a section on the pipeline track or a device for temporarily storing the sample to be output that is built in the target sample output module.

14. The pipeline system as claimed in claim 9, wherein the control device is further configured to:
determine, in a case where there are a plurality of target sample storage devices that meet a requirement, that the first ranked sample storage device is a final target sample storage device according to preset order of the target sample storage devices that meet the requirement. The preset order is order of the sample storage device identifiers or the order of distances between the sample storage device and the mechanical arm.

15. A method for controlling sample output, applied to a pipeline system, wherein the pipeline system comprises:
one or more analysis modules , configured to test samples;
at least two sample output modules, wherein each sample output module comprises a mechanical arm, and the mechanical arm is configured to output a sample to be output; and
a track, configured to connect the sample output modules to the analysis modules; wherein
the method comprises:
planning a plurality of sample output paths for the sample to be output, wherein the plurality of sample output paths indicate a plurality of performable sample output modules;
determining a target sample output module from the plurality of performable sample output modules according to a preset sample output ratio and an experimental state of the at least two sample output modules and the plurality of sample output paths; and
controlling the track to schedule the sample to be output to the target sample output module.
